# EUROPÄISCHE PATENTANMELDUNG

(11) **EP 4 815 099 A1**
(43) Veröffentlichungstag der Anmeldung: **30.09.2026**
(21) Anmeldenummer: 25166324.1
(22) Anmeldetag: 26.03.2025
(51) Int. Cl.: H01M 10/42, H01M 10/613, H01M 10/6235, H01M 10/653, H01M 50/211, H01M 50/213, B25F 5/00

(54) **VERGUSSMASSE ALS ZELLHALTER IN AKKUMULATOR**

(71) Anmelder: Hilti Aktiengesellschaft, 9494 Schaan (LI)
(72) Erfinder: Stanger, Robert, 87600 Kaufbeuren (DE); Richter, Rene, 86199 Augsburg (DE); Horst, Jonas, 86199 Augsburg (DE); Falkenstein, Reinhold, 86836 Untermeitingen (DE)
(74) Vertreter: Hilti Aktiengesellschaft Corporate Intellectual Property

(57) **Zusammenfassung**

Akkumulator, insbesondere als Energiespeichereinheit für eine Werkzeugmaschine, enthaltend wenigstens eine Energiespeicherzelle, eine Steuerungseinheit und ein Akkugehäuse.

Die wenigstens eine Energiespeicherzelle ist durch wenigstens einen ersten Anteil einer ersten Vergussmasse wenigstens anteilig umschlossen und in dem Akkugehäuse gehalten.

## Beschreibung

Die vorliegende Erfindung betrifft einen Akkumulator, insbesondere als Energiespeichereinheit für eine Werkzeugmaschine, enthaltend wenigstens eine Energiespeicherzelle, eine Steuerungseinheit und ein Akkugehäuse.

Des Weiteren betrifft die vorliegende Erfindung ein Verfahren zum Herstellen eines Akkumulators, insbesondere als Energiespeichereinheit für eine Werkzeugmaschine, enthaltend wenigstens eine Energiespeicherzelle, eine Steuerungseinheit und ein Akkugehäuse.

Akkumulatoren mit einzelnen Akku-Zellen, die mit Hilfe eines sogenannten Zellträgers sicher innerhalb eines Akku-Gehäuses gehalten werden, sind gemäß dem Stand der Technik als wiederlösbare Energieversorgung für eine elektrische Werkzeugmaschine weitestgehend gekannt. Die Akku-Zellen dienen zum Aufnehmen, Speichern und Abgeben elektrischer Energie. Zum Entladen des Akkumulators wird die in den Akku-Zellen gespeicherte elektrische Energie mit Hilfe eines sogenannten Zellverbinders von den Akku-Zellen an eine Akku-Schnittstelle geleitete. Zum Laden des Akkumulators wird wiederum elektrische Energie von einer Ladevorrichtung über die Akku-Schnittstelle und den Zellverbinder zu den Akku-Zellen geleitet.

Generell sind die am Markt erhältlichen Akkumulatoren oftmals zu schwer und komplex ausgestaltet. Darüber hinaus bieten diese Akkumulatoren keinen optimalen Schutz gegen eindringende Feuchtigkeit und Schmutz.

Es ist damit Aufgabe der vorliegenden Erfindung das vorstehend beschriebene Problem zu lösen.

Die Aufgabe wird gelöst durch den Gegenstand des unabhängigen Patentanspruchs 1 und 7.

Weitere vorteilhafte Ausführungsformen des erfindungsgemäßen Gegenstands sind in den entsprechenden abhängigen Patentansprüchen enthalten.

Die Aufgabe wird dabei insbesondere gelöst durch einen Akkumulator, insbesondere als Energiespeichereinheit für eine Werkzeugmaschine, enthaltend wenigstens eine Energiespeicherzelle, eine Steuerungseinheit und ein Akkugehäuse.

Erfindungsgemäß ist vorgesehen, dass die wenigstens eine Energiespeicherzelle durch wenigstens einen ersten Anteil einer ersten Vergussmasse wenigstens anteilig umschlossen und in dem Akkugehäuse gehalten ist.

Bei der Vergussmasse kann es sich um eine 1K- oder 2K-Vergussmassen aus PU (Polyurethan), Epoxid, Silikon oder dergleichen handeln.

Das Vergießen von selbstnivellierenden Materialien in einen dafür vorgesehenen Hohlraum ("potting") wird als Füllverguss bezeichnet. Dieses Verfahren dient unter anderem dazu, sensible Elektronik gegen schädliche Außeneinflüsse abzuschirmen oder Bauteile vor Spionage oder Brandgefahr zu schützen.

Entsprechend einer alternativen und vorteilhaften Ausführungsform kann es möglich sein, dass die Steuerungseinheit durch wenigstens einen ersten Anteil der ersten Vergussmasse wenigstens anteilig umschlossen und in dem Akkugehäuse gehalten ist.

Gemäß einer weiteren vorteilhaften Ausführungsform kann es möglich sein, dass die Steuerungseinheit durch wenigstens einen zweiten Anteil der ersten Vergussmasse und/oder durch wenigstens einen ersten Anteil einer zweiten Vergussmasse wenigstens anteilig umschlossen und in dem Akkugehäuse gehalten ist.

Entspricht einer weiteren vorteilhaften Ausführungsform kann es möglich sein, dass wenigstens eine Aussparung in der ersten und/oder zweiten Vergussmasse enthalten ist, sodass wenigstens ein Kühlstrom zur Kühlung der ersten und/oder zweiten Vergussmasse strömen kann.

Die Aussparung kann dabei einen im Wesentlichen kreisrunden Querschnitt enthalten. Die Aussparung kann auch als Durchbohrung, Öffnung oder Kanal bezeichnet werden.

Gemäß einer weiteren vorteilhaften Ausführungsform kann es möglich sein, dass wenigstens eine Sollbruchstelle in der ersten und/oder zweiten Vergussmasse enthalten ist zum gezielten Auftrennen und Auslösen der wenigstens einen Energiespeicherzelle und/oder Steuerungseinheit aus der ersten und/oder zweiten Vergussmasse.

Entspricht einer weiteren vorteilhaften Ausführungsform kann es möglich sein, dass die wenigstens eine Energiespeicherzelle in einer zylindrischen Form oder in Form einer Pouchzelle ausgestaltet ist.

Gemäß einer weiteren vorteilhaften Ausführungsform kann es möglich sein, dass wenigstens ein Verstärkungselement in der ersten oder zweiten Vergussmasse enthalten ist. Das Verstärkungselement kann auch als Bewehrung oder Armierung bezeichnet werden.

Entspricht einer weiteren vorteilhaften Ausführungsform kann es möglich sein, dass die Nennspannung weniger als 80 Volt entspricht.

Des Weiteren wird die Aufgabe gelöst durch ein Verfahren zum Herstellen eines Akkumulators, insbesondere als Energiespeichereinheit für eine Werkzeugmaschine, enthaltend wenigstens eine Energiespeicherzelle, eine Steuerungseinheit und ein Akkugehäuse.

Erfindungsgemäß sind folgenden Verfahrensschritte enthalten:
- Einführen wenigstens einer Energiespeicherzelle in eine Akkugehäuse;
- Einführen wenigstens eines ersten Anteils einer ersten Vergussmasse in das Akkugehäuse zum wenigstens anteiligen Umschließen der wenigstens einen Energiespeicherzelle, sodass die wenigstens eine Energiespeicherzelle durch die Vergussmasse in dem Akkugehäuse gehalten ist;
- Einführen einer Steuerungseinheit in das Akkugehäuse;
- Einführen wenigstens eines ersten Anteils einer ersten und/oder zweiten Vergussmasse in das Akkugehäuse zum wenigstens anteiligen Umschließen der Steuerungseinheit, sodass die Steuerungseinheit durch die Vergussmasse in dem Akkugehäuse gehalten ist.

Gemäß einer weiteren vorteilhaften Ausführungsform kann es möglich sein, der Verfahrensschritt enthalten ist:
- Einführen wenigstens einer Aussparung in die erste und/oder zweite Vergussmasse, sodass wenigstens ein Kühlstrom zur Kühlung durch die erste und/oder zweite Vergussmasse strömen kann.

Entsprechend einer weiteren vorteilhaften Ausführungsform kann es möglich sein, der Verfahrensschritt enthalten ist:
- Einführen wenigstens einer Sollbruchstelle in die erste und/oder zweite Vergussmasse zum gezielten Auftrennen und Auslösen der wenigstens einen Energiespeicherzelle und/oder Steuerungseinheit aus der ersten und/oder zweiten Vergussmasse.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine Seitenansicht auf einen erfindungsgemäßen Akkumulator gemäß einer ersten Ausführungsform mit einem Akkugehäuse in einem geschlossen Zustand;
- Figur 2: eine Seitenansicht auf einen erfindungsgemäßen Akkumulator gemäß der ersten Ausführungsform mit dem Akkugehäuse in einem geöffneten Zustand;

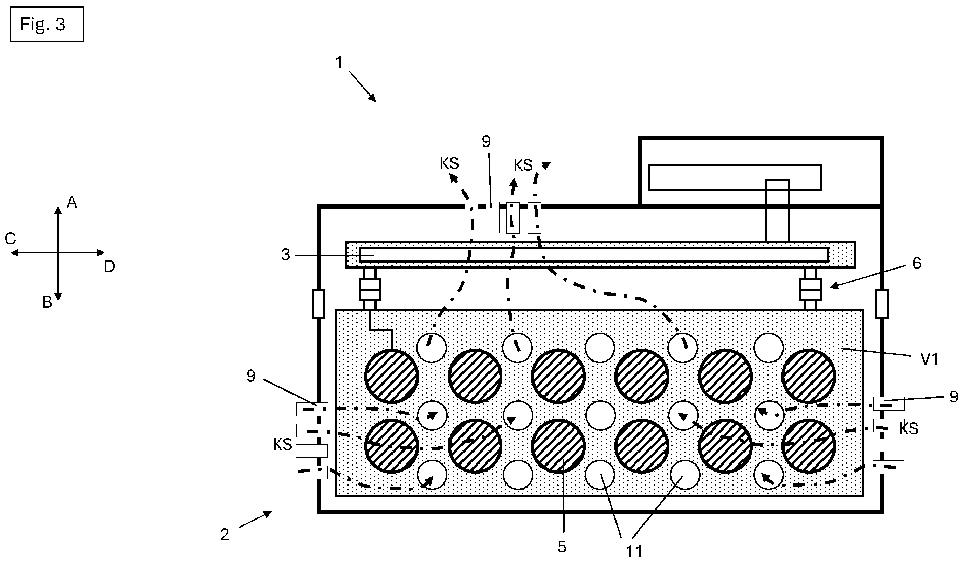

- Figur 3: eine Seitenansicht auf den erfindungsgemäßen Akkumulator gemäß einer zweiten Ausführungsform;
- Figur 4: eine Seitenansicht auf den erfindungsgemäßen Akkumulator gemäß einer dritten Ausführungsform;
- Figur 5: eine Seitenansicht auf den erfindungsgemäßen Akkumulator gemäß einer vierten Ausführungsform;

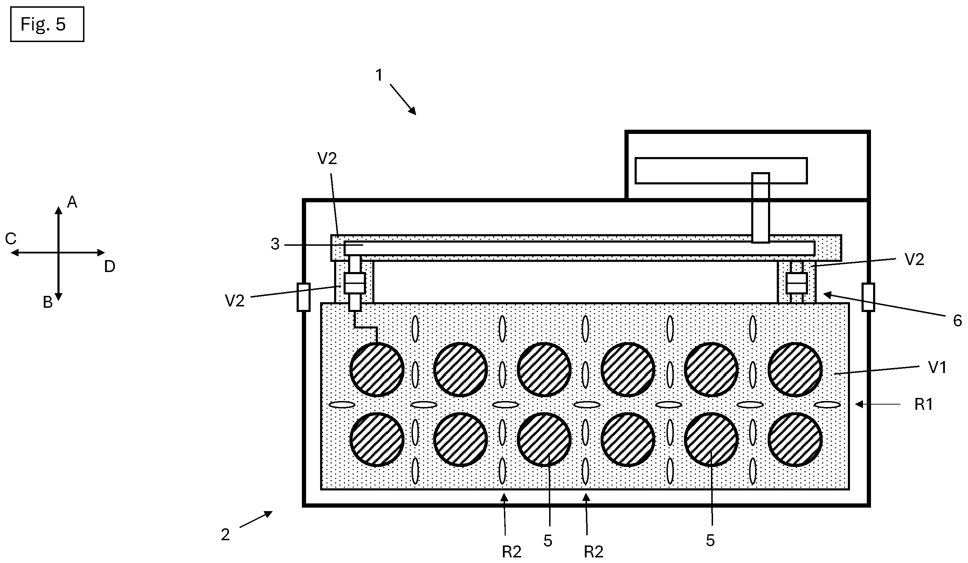

- Figur 5: eine Seitenansicht auf den erfindungsgemäßen Akkumulator gemäß einer fünften Ausführungsform

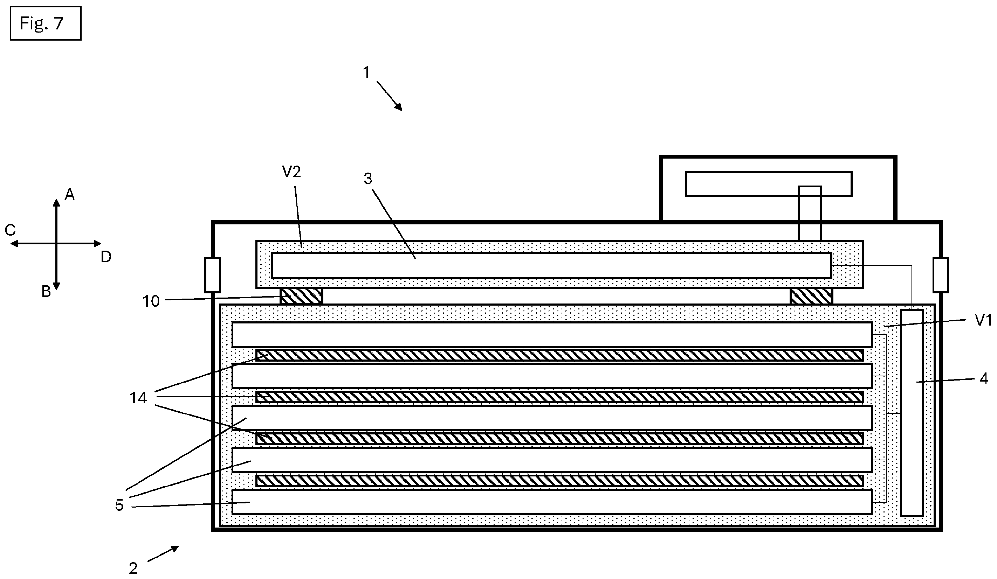

- Figur 7: eine Seitenansicht auf den erfindungsgemäßen Akkumulator gemäß einer sechsten Ausführungsform; und

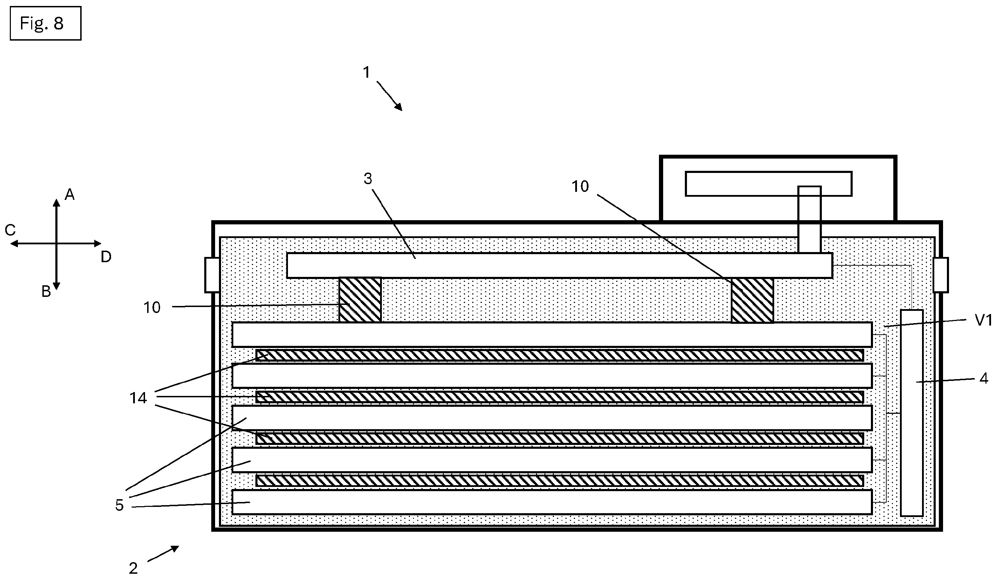

- Figur 8: eine Seitenansicht auf den erfindungsgemäßen Akkumulator gemäß einer siebten Ausführungsform.

### Ausführungsbeispiele:

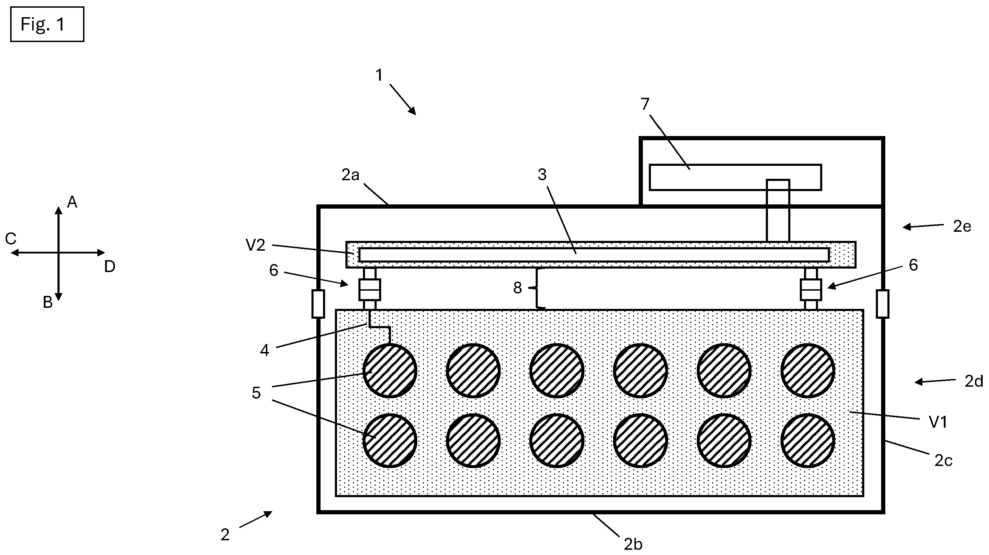

Figur 1 zeigt eine Schnittansicht durch einen erfindungsgemäßen Akkumulator 1 gemäß einer beispielhaften Ausführungsform.

Der Akkumulator 1 kann als Energiequelle wiederlösbar mit einer elektrischen Werkzeugmaschine verwendet werden. Bei der Werkzeugmaschine kann es sich um einen Bohrhammer, Akku-Schrauber, eine Säge, ein Schleifgerät oder dergleichen handeln. Die Werkzeugmaschine ist in den Figuren nicht dargestellt.

Der Akkumulator 1 enthält im Wesentlichen ein Akkugehäuse 2, eine Steuerungseinheit 3, eine Zellverbindungsvorrichtungen 4 und eine Anzahl an Energiespeicherzellen 5.

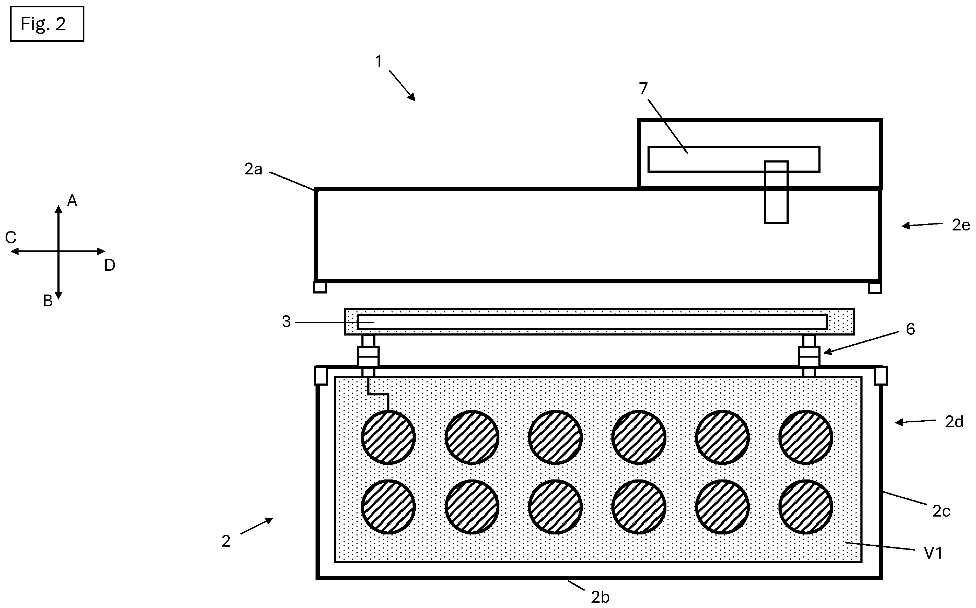

Das Akkugehäuse 2 weist eine Oberseite 2a, eine Unterseite 2b sowie vier Seitenwände 2c auf. An der Oberseite 2a des Akkugehäuses 2 ist eine Akkuschnittstelle 7 positioniert. Darüber hinaus weist das Akkugehäuse 2 eine Wanne 2d und einen Deckel 2e auf. Wie in Figur 2 angedeutet, kann der Deckel 2e in Pfeilrichtung von der Wanne 2d entfernt werden. Wenn der Deckel 2e von der Wanne 2d entnommen ist, befindet sich das Akkugehäuse 2 in einem geöffneten Zustand, sodass das Innere des Akkugehäuse 2 bzw. der Wanne 2d zugänglich ist.

Mit Hilfe der Akkuschnittstelle 7 kann der Akkumulator 1 wiederlösbar mit einer Werkzeugmaschine verbunden werden. Die Werkzeugmaschine ist in den Figuren nicht gezeigt. Des Weiteren kann mit Hilfe der Akkuschnittstelle 7 der Akkumulator 1 wiederlösbar mit einer Ladeeinrichtung verbunden werden. Die Ladeeinrichtung ist in den Figuren ebenfalls nicht dargestellt.

Die Steuerungseinheit 3 dient zum Steuern und Regeln der unterschiedlichen Funktionen des Akkumulators 1. Die Steuerungseinheit 3 ist in einem oberen Anteil des Akkugehäuses 2 in Pfeilrichtung R angeordnet. Des Weiteren ist die Steuerungseinheit 3 mit der Akkuschnittstelle 7 so verbunden, dass elektrische Energie von der Steuerungseinheit 3 zu der Akkuschnittstelle 7 oder von der Akkuschnittstelle 7 zu der Steuerungseinheit 3 geleitet werden kann.

Die Energiespeicherzellen 5 können auch als Akku-Zellen, Batteriezellen, Sekundärzelle oder Energiezellen bezeichnet werden und sind im Inneren des Akkugehäuses 2 angeordnet.

Die Energiespeicherzellen 5 dienen zum Aufnehmen, Speichern und erneuten Abgeben elektrischer Energie. Die Energiespeicherzellen 5 sind in zylindrischer Form sowie auf Basis einer Lithium-Ionen-Technologie ausgestaltet. Jede Energiespeicherzelle 5 enthält an einem ersten Ende einen ersten Polkontakt und an einem zweiten Ende einen zweiten Polkontakt. Der erste Polkontakt kann als Pluspol und der zweite Polkontakt kann als Minuspol bezeichnet werden Die Polkontakte 5a, 5b dienen zum Schließen eines Stromkreises und zur Übertragung elektrischer Energie von oder zu der Energiespeicherzelle 5.

Alternativ können die Energiespeicherzellen auch auf einer anderen geeigneten Technologie als Lithium-Ionen basieren. Es ist zudem auch möglich, dass unterschiedliche Technologien in einem einzigen Akkumulator 1 für die Energiespeicherzellen 5 zum Einsatz kommen.

In Figur 1 ist ein Akkumulator 1 gemäß einer ersten Ausführungsform gezeigt. Gemäß der ersten Ausführungsform sind die Energiespeicherzellen 5 zylinderförmig ausgestaltet und in einem ersten Vergussmasse V1 eingebettet. Die Energiespeicherzellen 5 werden dabei lediglich durch das erste Vergussmasse V1 gehalten. Der Akkumulator 1 benötigt dadurch keinen separaten bzw. eigenständigen Zellhalter, damit die Energiespeicherzellen 5 im Inneren des Akkugehäuses 2 in Position gehalten werden können. Wie ebenfalls in Figur 1 gezeigt, ist die Steuerungseinheit 3 in Pfeilrichtung A über den Energiespeicherzellen 5 im Inneren des Akkugehäuses 2 positioniert. Die Steuerungseinheit 3 ist einem zweiten Vergussmasse V2 eingebettet. Wie angedeutet, ist zwischen der Steuerungseinheit 3 eingebettet in der zweiten Vergussmasse V2 und den Energiespeicherzellen 5 eingebettet in der ersten Vergussmasse V1 ein Abstand 8 vorgesehen. Der Abstand 8 zwischen der Steuerungseinheit 3 und den Energiespeicherzellen 5 dient zum einen der elektrischen Isolierung und zum anderen für einen Kühlstrom KS zum Kühlen der Energiespeicherzellen 5 und Steuerungseinheit 2.

Wie ebenfalls in Figur 1 angedeutet, sind die Energiespeicherzellen und die Steuerungseinheit miteinander verbunden. Die Verbindung 6 ist in Form von Stecker ausgestaltet und dient zum Übertragen von elektrischer Energie und Signalen. Mit Hilfe der Signale können unterschiedliche Daten und Informationen zwischen den Energiespeicherzellen 5 und Steuerungseinheit 3 ausgetauscht werden. Gemäß der ersten Ausführungsform des Akkumulators 1 sind die Stecker für die Verbindung 6 zwischen den Energiespeicherzellen 5 und der Steuerungseinheit 2 nicht mit einem Vergussmasse vergossen.

Bei der Vergussmasse V1, V2 handelt es sich um eine 1K-Vergussmasse aus Epoxid. Gemäß dem ersten Ausführungsbeispiel besteht die erste und zweite Vergussmasse V1 und V2 aus demselben Werkstoff. Alternativ kann bei einem Akkumulator 1 entsprechend der ersten Ausführungsform die erste Vergussmasse V1 aus einem ersten Werkstoff (z.B. Epoxid) und die zweite Vergussmasse V2 aus einem zweiten Werkstoff (z.B. Silikon) bestehen.

In Figur 1 ist ein Akkumulator 1 gemäß einer zweiten Ausführungsform gezeigt. Die zweite Ausführungsform des Akkumulators 1 unterscheidet sich von der ersten Ausführungsform des Akkumulators 1 dadurch, dass eine Vielzahl an Aussparungen 11 in der ersten Vergussmasse V1 enthalten ist. Alternativ oder zusätzlich können auch derartige Aussparungen 11 in der zweiten Vergussmasse V2 enthalten sein.

Durch die Aussparungen ein oder mehrere Kühlströme KS zur Kühlung des Akkumulators 1 strömen. Ein Kühlstrom KS kann durch Lüftungsöffnungen 9 in das Akkugehäuse 2 ein- und austreten.

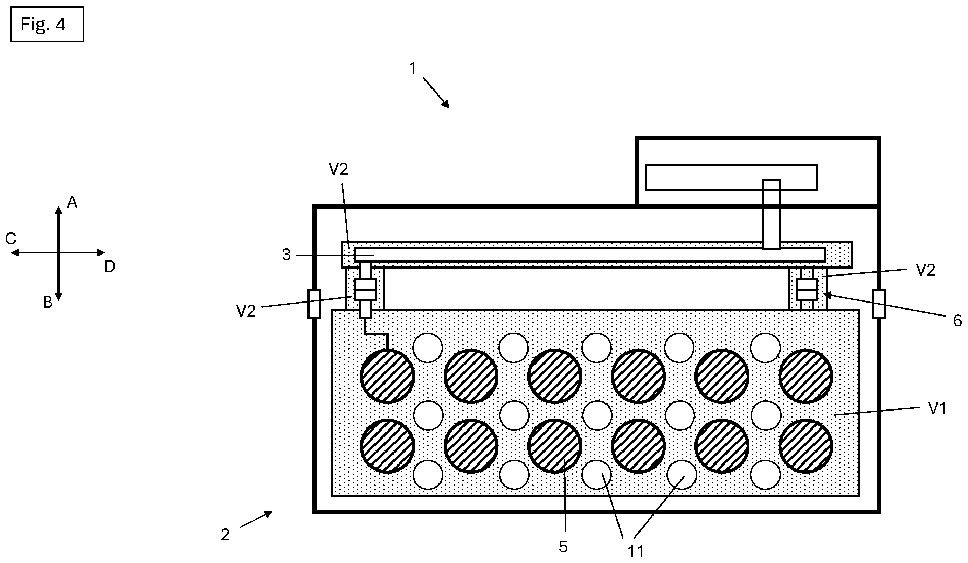

In Figur 4 ist ein Akkumulator 1 gemäß einer dritten Ausführungsform gezeigt. Die dritte Ausführungsform des Akkumulators 1 unterscheidet sich von der ersten Ausführungsform des Akkumulators 1 dadurch, dass die als Stecker ausgestaltete Verbindung 6 zwischen den Energiespeicherzellen 5 und der Steuerungseinheit 2 mit einem ersten Vergussmasse V1 vergossen ist. Das Vergießen der Verbindung 6 dient zum Schutz der Verbindung 6 gegen Feuchtigkeit und Schmutz.

In Figur 5 ist ein Akkumulator 1 gemäß einer vierten Ausführungsform gezeigt. Die vierte Ausführungsform des Akkumulators 1 unterscheidet sich von der ersten Ausführungsform des Akkumulators 1 dadurch, dass eine Anzahl an Sollbruchstellen 12 in der ersten Vergussmasse V1 enthalten sind. Wie in Figur 5 angedeutet, sind die Sollbruchstellen 12 durch eine erste und zweite Reihe R1, R2 von Aussparungen ausgestaltet.

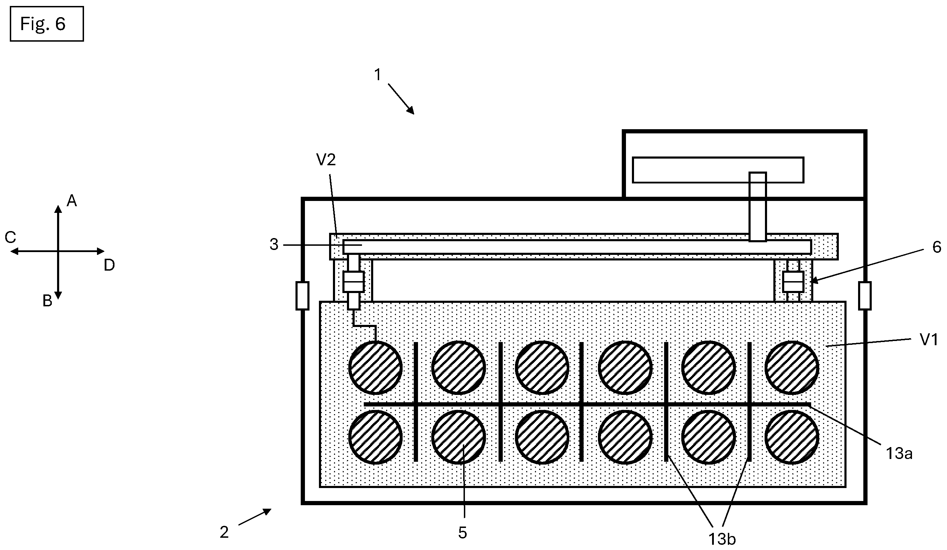

In Figur 6 ist ein Akkumulator 1 gemäß einer fünften Ausführungsform gezeigt. Die fünfte Ausführungsform des Akkumulators 1 unterscheidet sich von der ersten Ausführungsform des Akkumulators 1 dadurch, dass eine Anzahl an Verstärkungselementen 13a, 13b in der ersten Vergussmasse V1 enthalten sind. In der vorliegenden fünften Ausführungsform ist ein erstes langes Verstärkungselement 13a in eine Ausrichtung entlang der Pfeilrichtung C bzw. D und fünf kurze Verstärkungselemente 13b in einer Ausrichtung entlang der Pfeilrichtung A bzw. B in der ersten Vergussmasse V1 eingeführt.

In Figur 7 ist ein Akkumulator 1 gemäß einer sechsten Ausführungsform gezeigt. Die sechste Ausführungsform des Akkumulators 1 unterscheidet sich von den zuvor erwähnten Ausführungsform des Akkumulators 1 dadurch, dass die Energiespeicherzellen 5 in Pouch-Form ausgestaltet sind. Wie in Figur 7 angedeutet ist jeweils eine Abstandsmatte 14 zwischen zwei benachbarten pouchförmigen Energiespeicherzellen 5 vorgesehen. Die pouchförmigen Energiespeicherzellen 5 sind in einer ersten Vergussmasse V1 vergossen. Die in Pfeilrichtung A über den Energiespeicherzellen 5 angeordnete Steuerungseinheit 2 ist in einer zweiten Vergussmasse V2 vergossen.

In Figur 8 ist ein Akkumulator 1 gemäß einer siebten Ausführungsform gezeigt. Die siebte Ausführungsform des Akkumulators 1 unterscheidet sich von der sechsten Ausführungsform des Akkumulators 1 dadurch, dass die pouchförmigen Energiespeicherzellen 5 sowie die Steuerungseinheit 2 sind lediglich in der ersten Vergussmasse V1 vergossen. Zwischen den pouchförmigen Energiespeicherzellen 5 und der Steuerungseinheit 2 sind Stützelemente 10 positioniert.

### Bezugszeichen

- 1: Akkumulator
- 2: Akkugehäuse
- 2a: Oberseite des Akkugehäuses
- 2b: Unterseite des Akkugehäuses
- 2c: Seitenwand des Akkugehäuses
- 2d: Wanne des Akkugehäuses
- 2e: Deckel des Akkugehäuses
- 3: Steuerungseinheit
- 4: Zellverbindungsvorrichtung
- 5: Energiespeicherzelle
- 6: Verbindung
- 7: Akkuschnittstelle
- 8: Abstand zwischen Steuerungseinheit und Energiespeicherzellen
- 9: Lüftungsöffnung in Akkugehäuse
- 10: Stützelement
- 11: Aussparung
- 12: Sollbruchstelle
- 13a, 13b: Verstärkungselement
- 14: Abstandsmatte
- V1: erste Vergussmasse
- V2: zweite Vergussmasse
- R1: erste Reihe von Sollbruchstellen
- R2: zweite Reihe von Sollbruchstellen
- KS: Kühlstrom

## Patentansprüche

1. Akkumulator (1), insbesondere als Energiespeichereinheit für eine Werkzeugmaschine, enthaltend wenigstens eine Energiespeicherzelle (5), eine Steuerungseinheit (3) und ein Akkugehäuse (2),
**dadurch gekennzeichnet, dass** die wenigstens eine Energiespeicherzelle (5) durch wenigstens einen ersten Anteil einer ersten Vergussmasse (V1) wenigstens anteilig umschlossen und in dem Akkugehäuse (2) gehalten ist.

2. Akkumulator (1) nach Anspruch 1,
**dadurch gekennzeichnet, dass** die Steuerungseinheit (3) durch den wenigstens ersten Anteil der ersten Vergussmasse (V1) wenigstens anteilig umschlossen und in dem Akkugehäuse (2) gehalten ist.

3. Akkumulator (1) nach Anspruch 1 oder 2,
**dadurch gekennzeichnet, dass** die Steuerungseinheit (3) durch wenigstens einen zweiten Anteil der ersten Vergussmasse (V1) und/oder durch wenigstens einen ersten Anteil einer zweiten Vergussmasse (V2) wenigstens anteilig umschlossen und in dem Akkugehäuse (2) gehalten ist.

4. Akkumulator (1) nach wenigstens einem der Ansprüche 1 bis 3,
**dadurch gekennzeichnet, dass** wenigstens eine Aussparung (11) in der ersten und/oder zweiten Vergussmasse (V1, V2) enthalten ist, sodass wenigstens ein Kühlstrom (KS) zur Kühlung der ersten und/oder zweiten Vergussmasse (V1, V2) strömen kann.

5. Akkumulator (1) nach wenigstens einem der Ansprüche 1 bis 4,
**dadurch gekennzeichnet, dass** wenigstens eine Sollbruchstelle (12) in der ersten und/oder zweiten Vergussmasse (V1, V2) enthalten ist zum gezielten Auftrennen und Auslösen der wenigstens einen Energiespeicherzelle (5) und/oder Steuerungseinheit (3) aus der ersten und/oder zweiten Vergussmasse (V1, V2).

6. Akkumulator (1) nach wenigstens einem der Ansprüche 1 bis 5,
**dadurch gekennzeichnet, dass** die wenigstens eine Energiespeicherzelle (5) in einer zylindrischen Form oder in Form einer Pouchzelle ausgestaltet ist.

7. Akkumulator (1) nach wenigstens einem der Ansprüche 1 bis 6,
**dadurch gekennzeichnet, dass** wenigstens ein Verstärkungselement (13a, 13b) in der ersten oder zweiten Vergussmasse (V1, V2) enthalten ist.

8. Akkumulator (1) nach wenigstens einem der Ansprüche 1 bis 7,
**dadurch gekennzeichnet, dass** die Nennspannung weniger als 80 Volt entspricht.

9. Verfahren zum Herstellen eines Akkumulators (1), insbesondere als Energiespeichereinheit für eine Werkzeugmaschine, enthaltend wenigstens eine Energiespeicherzelle (5), eine Steuerungseinheit (3) und ein Akkugehäuse (2),
**gekennzeichnet durch** die Verfahrensschritte:
- Einführen wenigstens einer Energiespeicherzelle (5) in eine Akkugehäuse (2);
- Einführen wenigstens eines ersten Anteils einer ersten Vergussmasse (V1) in das Akkugehäuse (2) zum wenigstens anteiligen Umschließen der wenigstens einen Energiespeicherzelle (5), sodass die wenigstens eine Energiespeicherzelle (5) durch die Vergussmasse (V1) in dem Akkugehäuse (2) gehalten ist;
- Einführen einer Steuerungseinheit (3) in das Akkugehäuse (2);
- Einführen wenigstens eines ersten Anteils einer ersten und/oder zweiten Vergussmasse (V1, V2) in das Akkugehäuse (2) zum wenigstens anteiligen Umschließen der Steuerungseinheit (3), sodass die Steuerungseinheit (3) durch die Vergussmasse in dem Akkugehäuse (2) gehalten ist.

10. Verfahren zum Herstellen eines Akkumulators (1) nach Anspruch 9,
**gekennzeichnet durch** die Verfahrensschritte:
- Einführen wenigstens einer Aussparung (11) in die erste und/oder zweite Vergussmasse (V1, V2), sodass wenigstens ein Kühlstrom (KS) zur Kühlung durch die erste und/oder zweite Vergussmasse (V1, V2) strömen kann.

11. Verfahren zum Herstellen eines Akkumulators (1) nach Anspruch 9 oder 10,
**gekennzeichnet durch** die Verfahrensschritte:
- Einführen wenigstens einer Sollbruchstelle (12) in die erste und/oder zweite Vergussmasse (V1, V2) zum gezielten Auftrennen und Auslösen der wenigstens einen Energiespeicherzelle (5) und/oder Steuerungseinheit (3) aus der ersten und/oder zweiten Vergussmasse (V1, V2).
